# EUROPEAN PATENT APPLICATION

(11) **EP 4 675 115 A1**
(43) Date of publication of application: **07.01.2026**
(21) Application number: 23925002.0
(22) Date of filing: 21.11.2023
(51) Int. Cl.: F16C 3/02, F16H 57/04, H02K 9/193, H02K 5/20

(54) **SHAFT COMPONENT, DRIVING ASSEMBLY, AND VEHICLE**

(30) Priority: 27.02.2023 CN 202310215508
(71) Applicant: BYD Company Limited, Shenzhen, Guangdong 518118 (CN)
(72) Inventor: YANG, Shenglin, Shenzhen, Guangdong 518118 (CN); CHEN, Yong, Shenzhen, Guangdong 518118 (CN); GAO, Yuan, Shenzhen, Guangdong 518118 (CN); ZHANG, Hongming, Shenzhen, Guangdong 518118 (CN); ZHANG, Jun, Shenzhen, Guangdong 518118 (CN)
(74) Representative: Mathys & Squire
(86) International application number: PCT/CN2023/132827
(87) International publication number: WO 2024/179051

(57) **Abstract**

A vehicle (200), comprising a driving assembly (100). The driving assembly (100) comprises a shaft component (300). The shaft component (300) comprises: a shaft body (20) and a plug (30), wherein a first oil passage (21) and a plurality of oil outlet holes (60) spaced apart in the axial direction of the shaft body (20) are formed in the shaft body (20), and all of the plurality of oil outlet holes (60) are in communication with the first oil passage (21); one end of the plug (30) is cooperatively connected to an oil inlet end of the first oil passage (21), the plug (30) is provided with an oil inlet hole (31), the oil inlet hole (31) is in communication with the first oil passage (21), and an included angle between the oil inlet hole (31) and the axis of the shaft body (20) is an acute angle.

## Description

### CROSS-REFERENCE TO RELATED APPLICATIONS

The present application claims the priority of a Chinese patent application filed with the China National Intellectual Property Administration on February 27, 2023, with the application number 202310215508.2 and the title "SHAFT COMPONENT, DRIVE ASSEMBLY AND VEHICLE", the entire content of which is incorporated herein by reference.

### FIELD

The present application relates to the technical field of drive assemblies, and in particular to a drive assembly and a vehicle.

### BACKGROUND

Oil-cooled motors are increasingly used in new energy vehicle drive assemblies due to their good cooling effect. In order to increase the maximum vehicle speed, the maximum speed of the motors has been increased to over 20,000 rpm, and their cooling and lubrication systems are often realized through internal oil passages which are designed inside the rotating shafts, such as the motor shaft and the input shaft.

In the related art, under high-speed operating conditions, the mechanical pump connected to the wheel end rotates at high speed, with high inlet flow rate and high pressure, resulting in a relatively long range of the ejected oil. Under the action of centrifugal force, the problems that the flow distribution at the distal end of the oil circuit is large while that at the proximal end is small occur; conversely, under low-speed operating conditions, the mechanical pump rotates at low speed, with low inlet flow rate and low pressure, and the ejected oil has a relatively short range, which leads to a large flow distribution at the proximal end of the oil circuit and a lack of oil at the distal end. Thus, it causes the problem of uneven flow distribution at each oil port of the internal oil passages under high and low-speed operating conditions.

### SUMMARY

The present application aims to solve at least one of the technical problems existing in the prior art. To this end, the present application proposes a shaft component, which can eliminate the influence of the jet flow on the flow distribution of the drive assembly by an inclined oil inlet hole being arranged, so that both the proximal end and the distal end of the shaft body can meet the requirements at different rotational speeds.

The present application further proposes a drive assembly.

The present application also proposes a vehicle.

The shaft component according to the first aspect of the embodiment of the present application includes: a shaft body, with a first oil passage being arranged therein and a plurality of oil outlet holes being arranged thereon, the oil outlet holes being spaced apart along an axial direction of the shaft body, all of the plurality of oil outlet holes being in communication with the first oil passage ; a plug, one end of which is cooperatively connected to the oil inlet end of the first oil passage, and an oil inlet hole being arranged on the plug, the oil inlet hole being in communication with the first oil passage, and an included angle between the oil inlet hole and the axis of the shaft body being an acute angle.

According to the shaft component of the embodiment of the present application, by an inclined oil inlet hole being arranged, the influence of the jet flow on the flow distribution of the shaft component can be eliminated, so that both the proximal end and the distal end of the shaft body can meet the requirements at different rotational speeds.

According to some embodiments of the present application, the included angle between the oil inlet hole and the axial direction of the shaft body is 'α', and α satisfies the relation: 5° ≤ α ≤ 10°.

According to some embodiments of the present application, the plug includes: a first section and a second section, the first section and the second section being connected to each other in the axial direction, the diameter of the first section being larger than that of the second section, and a step being formed between the first section and the second section.

According to some embodiments of the present application, it further includes: a seal, a receiving groove being arranged on the plug, and the seal being clamped between the plug and the inner wall of the first oil passage and being located in the receiving groove.

According to some embodiments of the present application, it further includes: an oil baffle, which is cooperatively connected to the end of the first oil passage away from the plug.

According to some embodiments of the present application, in the axial direction of the shaft body, the shaft body has a plurality of oil outlet hole groups, the oil outlet hole groups include a first motor oil outlet hole group, the oil outlet hole of the first motor oil outlet hole group is a first oil outlet hole, and the first oil outlet hole is arranged close to the oil inlet end of the first oil passage; and a second motor oil outlet hole group, the oil outlet hole of the second motor oil outlet hole group being a second oil outlet hole, and the second oil outlet hole being arranged away from the oil inlet end of the first oil passage; wherein, a portion of the shaft body located between the first oil outlet hole and the second oil outlet hole is configured to arrange the rotor of the motor, and both the first oil outlet hole and the second oil outlet hole are configured to be arranged opposite to the stator of the motor; and, a sum of the areas of the first oil outlet hole is smaller than a sum of the areas of the second oil outlet hole.

According to some embodiments of the present application, in the axial direction of the shaft body, a plurality of oil outlet hole groups are disposed on the shaft body, the plurality of oil outlet hole groups being spaced apart along the axial direction of the shaft body, and each oil outlet hole group includes at least one oil outlet hole; the oil outlet hole groups include at least one bearing oil outlet hole group and at least one motor oil outlet hole group. The oil outlet hole of the bearing oil outlet hole group is configured to be arranged opposite to the bearing, and the oil outlet hole of the motor oil outlet hole group is configured to be arranged opposite to the motor; moreover, a sum of the areas of the oil outlet hole of each motor oil outlet hole group is greater than a sum of the areas of the oil outlet hole of each bearing oil outlet hole group.

According to some embodiments of the present application, the shaft body includes: an input shaft, the oil inlet end of the first oil passage being formed at one end of the input shaft ; and a motor shaft, one end of the motor shaft being sleeved on the other end of the input shaft; the motor shaft being configured to be sleeved with the rotor of the motor, and the oil outlet holes of the motor oil outlet hole group being all arranged on the motor shaft and configured to be arranged opposite to the stator of the motor.

According to some embodiments of the present application, the bearing oil outlet hole group includes a first bearing oil outlet hole group, and the oil outlet hole of the first bearing oil outlet hole group is a third oil outlet hole, which is arranged on the input shaft; the end of the input shaft close to the motor shaft being configured to arrange a first bearing, and the third oil outlet hole is configured to be arranged opposite to the first bearing.

According to some embodiments of the present application, the bearing oil outlet hole group includes a second bearing oil outlet hole group, and the oil outlet hole of the second bearing oil outlet hole group is a fourth oil outlet hole, which is arranged on the input shaft; the end of the motor shaft close to the input shaft is configured to arrange a second bearing, and the fourth oil outlet hole is configured to be arranged opposite to the second bearing.

According to some embodiments of the present application, the bearing oil outlet hole group includes a third bearing oil outlet hole group, and the oil outlet hole of the third bearing oil outlet hole group is a fifth oil outlet hole, which is arranged on the motor shaft; the end of the motor shaft away from the input shaft is configured to arrange a fourth bearing, and the fifth oil outlet hole is configured to be arranged opposite to the fourth bearing.

According to some embodiments of the present application, the third bearing is clamped between the housing and the input shaft. A second oil passage is arranged in the housing. The second oil passage is in communication with the oil inlet hole, and a sixth oil outlet hole is arranged on the second oil passage. The sixth oil outlet hole is arranged opposite to the third bearing.

The drive assembly according to the embodiment of the second aspect of the present application includes: the shaft component, the bearing and the motor. The motor includes a stator and a rotor. Wherein, the shaft body of the shaft component is cooperatively connected to the rotor of the motor and the bearing respectively, and at least one oil outlet hole is arranged opposite to the stator of the motor, and at least one oil outlet hole is arranged opposite to the bearing.

The vehicle according to the embodiment of the third aspect of the present application includes the drive assembly.

The additional aspects and advantages of the present application will be partly presented in the following description, partly become apparent from the following description, or be learned through the practice of the present application.

### BRIEF DESCRIPTION OF THE DRAWINGS

The foregoing and / or additional aspects and advantages of the present application will become apparent and readily understood from the description of embodiments taken in conjunction with the following drawings, wherein:
FIG. 1 is a cross-sectional view of the drive assembly according to an embodiment of the present application.
FIG. 2 is a partial schematic diagram A in Fig. 1.
FIG. 3is a partial schematic diagram B in Fig. 1.
FIG. 4 is a cross-sectional view of the plug and the seal according to an embodiment of the present application.
FIG. 5 is a schematic block diagram of a vehicle according to an embodiment of the present application.

Reference numerals:
vehicle 200; drive assembly 100; housing 10; second oil passage 11; sixth oil outlet hole 12; shaft component 300;shaft body 20; first oil passage 21; input shaft 22; motor shaft 23; first oil outlet hole 24; second oil outlet hole 25; third oil outlet hole 26; fourth oil outlet hole 27; fifth oil outlet hole 28; oil baffle 29; motor oil outlet hole group 70; first motor oil outlet hole group 701; second motor oil outlet hole group 702; bearing oil outlet hole group 703; oil outlet hole 60; plug 30; oil inlet hole 31; receiving groove 32; first section 33; second section 34; step 35; motor 40; stator 41; rotor 42;seal 51; bearing 50; first bearing 52; second bearing 53; third bearing 54; fourth bearing 55.

### DETAILED DESCRIPTION

The embodiments of the present application will be described in detail below, and the embodiments described with reference to the accompanying drawings are exemplary.

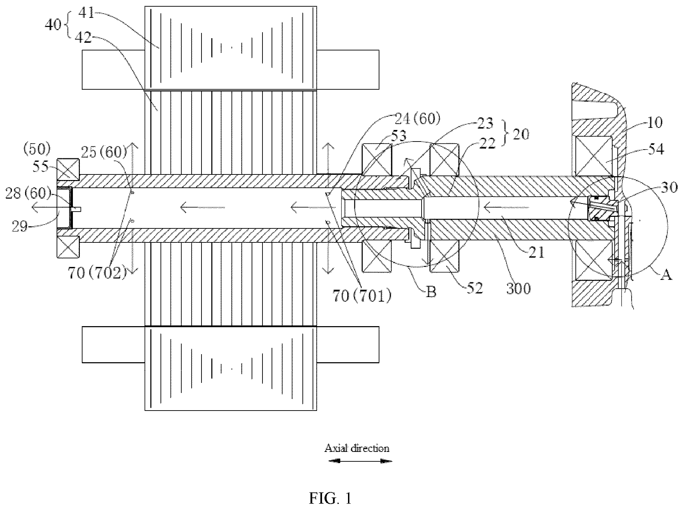

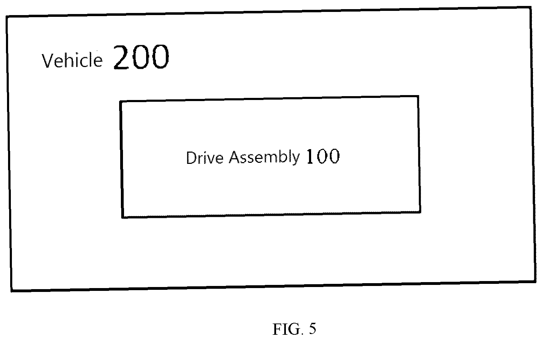

The shaft component 300 according to the embodiment of the present application will be described below with reference to FIGS. 1 to 4. The present application also proposes a drive assembly 100 having the above-mentioned shaft component 300. The present application further proposes a vehicle 200 having the above-mentioned drive assembly 100, as shown in FIG. 5.

As shown in combination with FIGS. 1 to 4, the shaft component 300 of the embodiment of the present application includes a shaft body 20 and a plug 30. The shaft body 20 is arranged in a housing 10. The shaft body 20 is provided, with a first oil passage 21 being arranged therein and a plurality of oil outlet holes 60 being arranged thereon, the oil outlet holes being spaced apart along the axial direction of the shaft body 20. All of the plurality of oil outlet holes 60 are in communication with the first oil passage 21. A motor 40 and a plurality of bearings 50 are sleeved on the shaft component 300. When the motor 40 is energized, the rotor 42 rotates relative to the stator 41 under the action of electromagnetic force. And since the rotor 42 and the shaft body 20 rotate coaxially, the motor 40 outputs power. Since the coils of the motor 40 generate heat when the motor 40 is energized, it is necessary to cool the coils. By arranging a plurality of oil outlet holes 60 on the shaft component 300, the oil can be ejected from the oil outlet holes 60 to cool and lubricate the motor 40 and the bearings 50.

One end of the plug 30 is in communication with the oil inlet end of the first oil passage 21, and the other end of the plug 30 is connected to the housing 10. An oil inlet hole 31 is arranged on the plug 30. That is to say, the plug 30 connects the housing 10 and the shaft body 20, and one end of the oil inlet hole 31 on the plug 30 is in communication with the first oil passage 21, and the other end of the oil inlet hole 31 can be in communication with the input oil passage, that is, the oil can enter the drive assembly 100 through the plug 30.

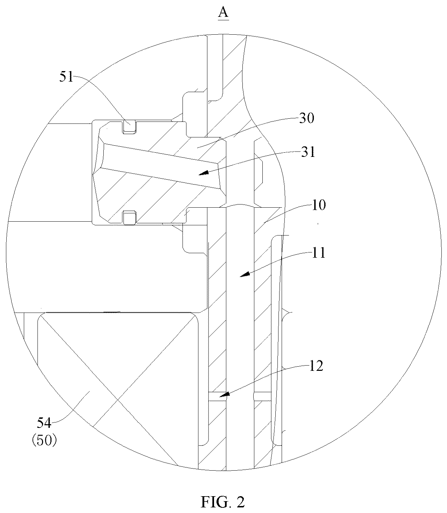

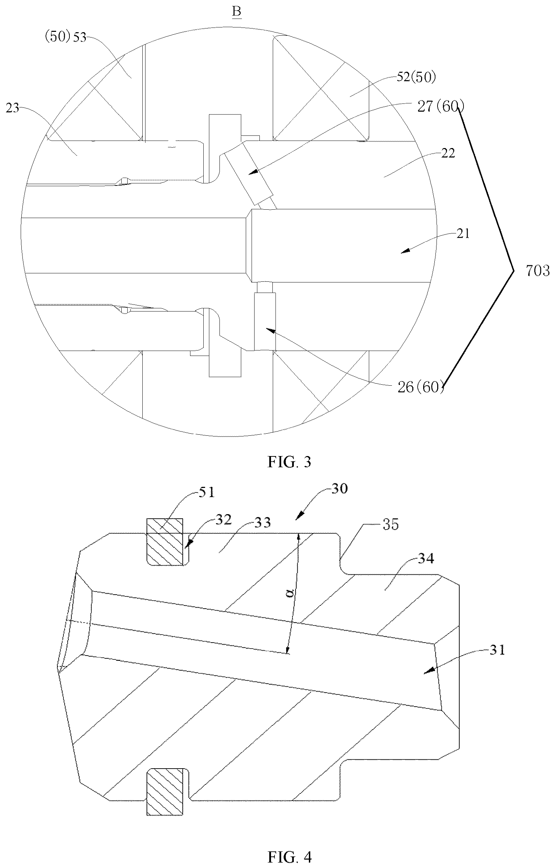

As shown in combination with FIGS. 2 and 4, further, the included angle between the oil inlet hole 31 and the axial direction of the shaft body 20 is an acute angle. Since the mechanical pump has high rotation speed, large inlet flow rate and pressure, and the ejected oil has a long range, the centrifugal force causes more flow distribution at the distal end of the first oil passage 21 and less flow distribution at the proximal end. By the inclined oil inlet hole 31 being arranged, the oil adheres closely to the inner wall of the first oil passage 21 after entering the first oil passage 21, which can eliminate the influence of the jet flow on the oil, and thus the oil can be reasonably distributed.

Therefore, by the inclined oil inlet hole 31 being arranged, the influence of the jet flow on the flow distribution of the shaft component 300 can be eliminated, so that both the proximal end and the distal end of the shaft body 20 can meet the requirements at different rotation speeds.

As shown in FIG. 4, the included angle between the oil inlet hole 31 and the axial direction of the shaft body 20 is 'α', and α satisfies the relationship: 5° ≤ α ≤ 10° . By the included angle between the oil inlet hole 31 and the axial direction being set between 5° and 10°, in one aspect the influence of the jet flow on the oil can be eliminated, and in another aspect, the impact of the oil on the oil passage can be avoided. For example, when the included angle between the oil inlet hole 31 and the axial direction is less than 5°, due to the small inclination angle of the oil inlet hole 31, the oil cannot completely eliminate the influence of the jet flow; in another example, when the included angle between the oil inlet hole 31 and the axial direction is greater than 10°, the inclination angle of the oil inlet hole 31 is relatively large, that is, the included angle between the oil inlet hole 31 and the inner wall of the oil passage is relatively large, so that the oil is likely to impact the oil passage. In addition, when the included angle between the oil inlet hole 31 and the axial direction is greater than 10°, the size of the plug 30 in the axial direction is relatively small, so that the mating area between the plug 30 and the shaft body 20 is small, which affects the sealing performance between the plug 30 and the shaft body 20.

As shown in FIG. 4, a receiving groove 32 is arranged on the plug 30; the drive assembly 100 further includes a seal 51, and the seal 51 is clamped between the plug 30 and the inner wall of the first oil passage 21 and is located in the receiving groove 32. With such a setting, by the seal 51 being clamped between the plug 30 and the first oil passage 21, the seal 51 can be used to improve the sealing performance between the plug 30 and the shaft body 20, so that the leakage of the drive assembly 100 can be avoided. In addition, the receiving groove 32 is arranged on the plug 30, and the seal 51 is arranged in the receiving groove 32. As a result, the sealing performance between the plug 30 and the shaft body 20 can be further enhanced, and the misalignment of the seal 51 in the axial direction can be avoided.

As shown in FIG. 4, the plug 30 includes a first section 33 and a second section 34, and the first section 33 and the second section 34 are connected to each other in the axial direction. The diameter of the first section 33 is larger than that of the second section 34 so that a step 35 is formed between the first section 33 and the second section 34. A receiving groove 32 is arranged on the first section 33, and the second section 34 has an interference fit with the housing 10. The plug 30 is configured as a first section 33 and a second section 34 that are connected to each other in the axial direction, and a step 35 is arranged between the first section 33 and the second section 34. In this way, the second section 34 can be conveniently fitted with the housing 10. In addition, the second section 34 has an interference fit with the housing 10. Through the interference fit, in one aspect, the connection between the second section 34 and the housing 10 can be realized, and in another aspect, the sealing between the second section 34 and the housing 10 can be realized.

The shaft component 300 further includes: an oil baffle 29, and the oil baffle 29 is cooperatively connected to one end of the first oil passage 21 away from the plug 30. In this way, the oil baffle 29 can seal one end of the first oil passage 21 away from the plug 30, so that the oil does not leak from other positions except flowing out from the plurality of oil outlet holes 60.

According to an embodiment of the present application, in the axial direction of the shaft body 20, the shaft body 20 has a plurality of oil outlet hole groups. The oil outlet hole groups include a first motor oil outlet hole group 701 and a second motor oil outlet hole group 702. The oil outlet hole 60 of the first motor oil outlet hole group 701 is a first oil outlet hole 24, and the oil outlet hole 60 of the second motor oil outlet hole group 702 is a second oil outlet hole 25. Among them, the first oil outlet hole 24 is arranged close to the oil inlet end of the first oil passage 21, and the second oil outlet hole 25 is arranged away from the oil inlet end of the first oil passage 21. The portion of the shaft body 20 between the first oil outlet hole 24 and the second oil outlet hole 25 is configured to arrange the rotor 42 of the motor 40. The first oil outlet hole 24 and the second oil outlet hole 25 are both configured to be arranged opposite to the stator 41 of the motor 40, and the sum of the areas of the first oil outlet hole 24 is smaller than the sum of the areas of the second oil outlet hole 25. Since the oil flow is reduced when the oil passes through the second oil outlet hole 25 after being divided by the first oil outlet hole 24, the sum of the areas of the second oil outlet hole 25 can be set larger than the sum of the areas of the first oil outlet hole 24, so that the cooling flow on both sides of the motor 40 can be evenly distributed, and thus even heat dissipation of the motor 40 can be achieved.

According to another embodiment of the present application, in the axial direction of the shaft body 20, a plurality of oil outlet hole groups are disposed on the shaft body 20, and the plurality of oil outlet hole groups are spaced apart along the axial direction of the shaft body 20. Each oil outlet hole group includes at least one oil outlet hole 60; the oil outlet hole groups include at least one bearing oil outlet hole group 703 and at least one motor oil outlet hole group 70. Among them, the oil outlet hole 60 of the bearing oil outlet hole group 703 is configured to be arranged opposite to the bearing 50, the oil outlet hole 60 of the motor oil outlet hole group 70 is configured to be arranged opposite to the motor 40, and the sum of the areas of the oil outlet hole of each motor oil outlet hole group 70 is greater than the sum of the areas of the oil outlet hole 60 of each bearing oil outlet hole group 703. Since the amount of cooling oil required by the motor 40 is greater than the amount of lubricating oil required by the bearing 50, the sum of the areas of the oil outlet hole 60 of each motor oil outlet hole group 70 is set to be greater than the sum of the areas of the oil outlet hole 60 of each bearing oil outlet hole group 703,so that it can be guaranteed that the motor 40 is adequately cooled.

As shown in FIG. 1, the shaft body 20 includes a motor shaft 23 and an input shaft 22.The oil inlet end of the first oil passage 21 is formed at one end of the input shaft 22, and one end of the motor shaft 23 is sleeved on the other end of the input shaft 22;the motor shaft 23 is configured to have the rotor 42 of the motor 40 sleeved thereon, and the oil outlet holes of the motor oil outlet hole group 70 are all arranged on the motor shaft 23 and are configured to be arranged opposite to the stator 41 of the motor 40. That is to say, the shaft body 20 is composed of the motor shaft 23 and the input shaft 22. Both the first oil outlet hole 24 and the second oil outlet hole 25 are arranged on the motor shaft 23, and the first oil outlet hole 24 and the second oil outlet hole 25 are located on both sides of the rotor 42 in the axial direction, so that the first oil outlet hole 24 and the second oil outlet hole 25 can respectively cool and lubricate both sides of the rotor 42 and the stator 41, thereby the temperatures of the rotor 42 and the stator 41 can be effectively reduced.

As shown in FIG. 3, the bearing oil outlet hole group 703 includes a first bearing oil outlet hole group. The oil outlet hole of the first bearing oil outlet hole group is a third oil outlet hole 26. The third oil outlet hole 26 is arranged on the input shaft 22. The end of the input shaft 22 close to the motor shaft 23 is configured to arrange a first bearing 52, and the third oil outlet hole 26 is configured to be arranged opposite to the first bearing 52.The third oil outlet hole 26 that is in communication with the first oil passage 21 is arranged on the input shaft 22 and arranged opposite to the first bearing 52,for example, the end of the third oil outlet hole 26 away from the first oil passage 21 is arranged on the left or right side of the first bearing 52, so that the oil can be ejected to the first bearing 52 through the third oil outlet hole26, and the first bearing 52 can be lubricated and cooled by the oil.

As shown in FIG. 3, the bearing oil outlet hole group 703 includes a second bearing oil outlet hole group. The oil outlet hole of the second bearing oil outlet hole group is a fourth oil outlet hole 27. The fourth oil outlet hole 27 is arranged on the input shaft 22. The end of the motor shaft 23 close to the input shaft 22 is configured to arrange a second bearing 53, and the fourth oil outlet hole 27 is configured to be arranged opposite to the second bearing 53. The fourth oil outlet hole 27 which is in communication with the first oil passage 21 is arranged on the input shaft 22 and arranged opposite to the second bearing 53, the oil can be ejected to the second bearing 53 through the fourth oil outlet hole 27, and the second bearing 53 can be lubricated and cooled by the oil.

The second bearing 53 is arranged on the motor shaft 23.In order to avoid that the first oil outlet hole 24 and the second oil outlet hole 25 are affected by the fact that the fourth oil outlet hole 27 is opened on the motor shaft 23, the fourth oil outlet hole 27 is arranged on the input shaft 22, and the fourth oil outlet hole 27 is arranged obliquely, so that the fourth oil outlet hole 27 can be arranged opposite to the second bearing 53, the second bearing 53 can be lubricated and cooled by the oil.

As shown in FIG. 2, a third bearing 54 is arranged at the end of the input shaft 22 away from the motor shaft 23. The third bearing 54 is clamped between the housing 10 and the input shaft 22. A second oil passage 11 is arranged in the housing 10. The second oil passage 11 is in communication with the oil inlet hole 31, and a sixth oil outlet hole 12 is arranged on the second oil passage 11. The sixth oil outlet hole 12 is arranged opposite to the third bearing 54. With such an arrangement, the sixth oil outlet hole 12 which is in communication with the second oil passage 11 is arranged on the housing 10 and arranged opposite to the third bearing 54, the oil can be ejected to the third bearing 54 through the sixth oil outlet hole 12, and the third bearing 54 can be lubricated and cooled by the oil.

The second oil passage 11 is arranged on the housing 10, and the oil inlet hole 31 of the plug 30 is communicated between the first oil passage 21 and the second oil passage 11,so that the oil enters the drive assembly 100 from the second oil passage 11 on the housing 10 and enters the first oil passage 21 through the oil inlet hole 31, thus the lubrication and heat dissipation of the drive assembly 100 by the oil can be achieved.

Further, the sixth oil outlet hole 12 is arranged on the housing 10, so that the arrangement of the sixth oil outlet hole 12 can be facilitated.

In addition, the first bearing 52 and the third bearing 54 are respectively arranged at both ends of the input shaft 22. Through the arrangement of the first bearing 52 and the third bearing 54, in one aspect, the input shaft 22 can be supported, and in another aspect, the rotation of the input shaft 22 can be facilitated.

In addition, as shown in combination with FIG. 1, the bearing oil outlet hole group 703 includes a third bearing oil outlet hole group. The oil outlet hole of the third bearing oil outlet hole group is a fifth oil outlet hole 28. The fifth oil outlet hole 28 is arranged on the motor shaft 23. The end of the motor shaft 23 away from the input shaft 22 is configured to arrange a fourth bearing 55, and the fifth oil outlet hole 28 is configured to be arranged opposite to the fourth bearing 55. With such an arrangement, the fifth oil outlet hole 28 that is in communication with the first oil passage 21 is arranged on the motor shaft 23 and is arranged opposite to the fourth bearing 55, the oil can be ejected to the fourth bearing 55 through the fifth oil outlet hole 28, and the fourth bearing 55 can be lubricated and cooled by the oil.

In addition, the second bearing 53 and the fourth bearing 55 are respectively arranged at both ends of the motor shaft 23. Through the arrangement of the second bearing 53 and the fourth bearing 55, in one aspect, the motor shaft 23 can be supported, and in another aspect, the rotation of the motor shaft 23 can be facilitated.

The drive assembly 100 according to the second aspect embodiment of the present application includes: a shaft component 300, a motor 40, and a bearing 50. The shaft body 20 of the shaft component 300 is cooperatively connected to the rotor 42 of the motor 40 and the bearing 50 respectively. At least one oil outlet hole 60 is arranged opposite to the stator 41 of the motor 40, and at least one oil outlet hole 60 is arranged opposite to the bearing 50. Specifically, the motor 40 includes a stator 41 and a rotor 42. The stator 41 is fixed to the housing 10, the rotor 42 is fixed to the shaft body 20, the stator 41 and the rotor 42 are arranged opposite to each other, and the rotor 42 is clamped between the first oil outlet hole 24 and the second oil outlet hole 25.

The vehicle 200 according to the third aspect embodiment of the present application includes the drive assembly 100 according to the second aspect embodiment of the present application, as shown in FIG. 5.

In the description of the present application, it should be understood that the orientation or positional relationships indicated by the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for the convenience of describing the present application and simplifying the description, rather than indicating or implying that the device or element referred to must have a specific orientation, be constructed and operated in a specific orientation. Therefore, it should not be construed as a limitation to the present application.

In the description of this specification, descriptions with reference to the terms "one embodiment", "some embodiments", "schematic embodiments", ''''an example ", " a particular example ", or "some examples" or the like mean that specific features, structures, materials, or characteristics described in connection with the embodiment or example are included in at least one embodiment or example herein. In this specification, schematic representations of the above terms do not necessarily refer to the same embodiment or example.

Although the embodiments of the present application have been shown and described, those of ordinary skill in the art can understand that various changes, modifications, substitutions, and variations can be made to these embodiments without departing from the principles and purposes of the present application. The scope of the present application is defined by the claims and their equivalents.

## Claims

1. A shaft component (300), comprising:
a shaft body (20), with a first oil passage (21) being arranged therein and a plurality of oil outlet holes (60) being arranged thereon, the oil outlet holes being spaced apart along an axial direction of the shaft body (20), all of the plurality of oil outlet holes (60) being in communication with the first oil passage (21); and
a plug (30), one end of the plug (30) being cooperatively connected to the oil inlet end of the first oil passage (21), an oil inlet hole (31) being arranged on the plug (30), the oil inlet hole (31) being in communication with the first oil passage (21), and an included angle between the oil inlet hole (31) and the axis of the shaft body (20) being an acute angle.

2. The shaft component (300) according to claim 1, wherein the included angle between the oil inlet hole (31) and the axial direction of the shaft body (20) is 'α', and α satisfies the relation: 5° ≤ α ≤ 10°.

3. The shaft component (300) according to claim 1 or 2, wherein the plug (30) comprises:
a first section (33); and
a second section (34) that is connected to the first section (33) in an axial direction of the plug (30), the diameter of the first section (33) being larger than that of the second section (34), and a step (35) is formed between the two sections.

4. The shaft component (300) according to any one of claims 1 to 3, wherein the shaft component further comprises a seal (51), a receiving groove (32) is arranged on the plug (30), and the seal (51) is clamped between the plug (30) and the inner wall of the first oil passage (21) and is located in the receiving groove (32).

5. The shaft component (300) according to any one of claims 1 to 4, wherein the shaft component further comprises an oil baffle (29), and the oil baffle (29) is cooperatively connected to the end of the first oil passage (21) away from the plug (30).

6. The shaft component (300) according to any one of claims 1 to 5, wherein, in the axial direction of the shaft body (20), the shaft body (20) has a plurality of oil outlet hole groups, and the oil outlet hole groups comprise:
a first motor oil outlet hole group (701), the oil outlet hole (60) of the first motor oil outlet hole group (701) is a first oil outlet hole (24), and the first oil outlet hole (24) is arranged close to the oil inlet end of the first oil passage (21); and
a second motor oil outlet hole group (702), the oil outlet hole (60) of the second motor oil outlet hole group (702) is a second oil outlet hole (25), and the second oil outlet hole (25) is arranged away from the oil inlet end of the first oil passage (21);
wherein a portion of the shaft body (20) between the first oil outlet hole (24) and the second oil outlet hole (25) is configured to arrange the rotor (42) of the motor (40), and both the first oil outlet hole (24) and the second oil outlet hole (25) are configured to be arranged opposite to the stator (41) of the motor (40); and
a sum of the areas of the first oil outlet hole (24) is smaller than a sum of the areas of the second oil outlet hole (25).

7. The shaft component (300) according to any one of claims 1 to 5, wherein, in the axial direction of the shaft body (20), a plurality of oil outlet hole groups are disposed on the shaft body (20), the plurality of oil outlet hole groups are spaced apart along the axial direction of the shaft body (20), and each oil outlet hole group comprises at least one oil outlet hole (60); the oil outlet hole groups comprise at least one bearing oil outlet hole group (703) and at least one motor oil outlet hole group (70), the oil outlet hole (60) of the bearing oil outlet hole group (703) is configured to be arranged opposite to the bearing (50), and the oil outlet hole (60) of the motor oil outlet hole group (70) is configured to be arranged opposite to the motor (40);and
a sum of the areas of the oil outlet hole (60) of each motor oil outlet hole group (70) is greater than a sum of the areas of the oil outlet hole (60) of each bearing oil outlet hole group (703).

8. The shaft component (300) according to claim 7, wherein the shaft body (20) comprises:
an input shaft (22),the oil inlet end of the first oil passage (21) is formed at one end of the input shaft (22);
a motor shaft (23), one end of the motor shaft (23) is sleeved on the other end of the input shaft (22), and the rotor (42) of the motor (40) is configured to be sleeved on the motor shaft (23), and the oil outlet holes (60) of the motor oil outlet hole group (70) are all arranged on the motor shaft (23) and are configured to be arranged opposite to the stator (41) of the motor (40).

9. The shaft component (300) according to claim 8, wherein the bearing oil outlet hole group (703) comprises a first bearing oil outlet hole group, the oil outlet hole (60) of the first bearing oil outlet hole group is a third oil outlet hole (26), and the third oil outlet hole (26) is arranged on the input shaft (22); the end of the input shaft (22) close to the motor shaft (23) is configured to arrange a first bearing (52), and the third oil outlet hole (26) is configured to be arranged opposite to the first bearing (52).

10. The shaft component (300) according to claim 8 or 9, wherein the bearing oil outlet hole group (703) comprises a second bearing oil outlet hole group, the oil outlet hole (60) of the second bearing oil outlet hole group is a fourth oil outlet hole (27), and the fourth oil outlet hole (27) is arranged on the input shaft (22); the end of the motor shaft (23) close to the input shaft (22) is configured to arrange a second bearing (53), and the fourth oil outlet hole (27) is configured to be arranged opposite to the second bearing (53).

11. The shaft component (300) according to any one of claims 8 to 10, wherein the bearing oil outlet hole group (703) comprises a third bearing oil outlet hole group, the oil outlet hole (60) of the third bearing oil outlet hole group is a fifth oil outlet hole (28), and the fifth oil outlet hole(28) is arranged on the motor shaft (23); the end of the motor shaft (23) away from the input shaft (22) is configured to arrange a fourth bearing (55), and the fifth oil outlet hole (28) is configured to be arranged opposite to the fourth bearing (55).

12. The shaft component (300) according to any one of claims 8 to 11, wherein the third bearing (54) is clamped between the housing (10) and the input shaft (22), a second oil passage (11) is arranged in the housing (10), the second oil passage (11) is in communication with the oil inlet hole (31), a sixth oil outlet hole (12) is arranged on the second oil passage (11), and the sixth oil outlet hole (12) is arranged opposite to the third bearing (54).

13. A drive assembly (100), comprising:
the shaft component (300) according to any one of claims 1 to 12;
a bearing (50); and
a motor (40), the motor (40)comprising a stator (41) and a rotor (42), wherein the shaft body (20) of the shaft component (300) is cooperatively connected to the rotor (42) and the bearing (50) respectively, at least one oil outlet hole (60) is arranged opposite to the stator (41), and at least one oil outlet hole (60) is arranged opposite to the bearing (50).

14. A vehicle (200), comprising: the drive assembly (100) according to claim 13.
